# NEUE EUROPÄISCHE PATENTSCHRIFT

(11) **EP 0 538 784 B2**
(45) Veröffentlichungstag und Bekanntmachung des Hinweises auf die Entscheidung über den Einspruch: **27.12.2000**
(45) Hinweis auf die Patenterteilung: 24.04.1996
(21) Anmeldenummer: 92117907.3
(22) Anmeldetag: 20.10.1992
(51) Int. Cl.: C09B 67/22, C09B 67/20, D06P 1/44

(54) **Pigmentzubereitungen**
Pigment preparations
Préparations pigmentaires

(30) Priorität: 23.10.1991 DE 4134933
(43) Veröffentlichungstag der Anmeldung: 28.04.1993
(73) Patentinhaber: Clariant GmbH, 65929 Frankfurt am Main (DE)
(72) Erfinder: Dietz, Erwin, Dr., W-6233 Kelkheim/Ts. (DE); Urban, Manfred, W-6200 Wiesbaden (DE)

(56) Entgegenhaltungen:
- EP-A- 0 014 458
- EP-A- 0 106 772
- EP-A- 0 243 304
- EP-A- 0 360 182
- EP-A- 0 360 184
- GB-A- 2 071 683
- US-A- 3 275 637
- US-A- 3 635 981

## Beschreibung

Die vorliegende Erfindung liegt auf dem technischen Gebiet von Pigmentzubereitungen sowie deren Verwendung zum Pigmentieren von hochmolekularen Materialien.

Bei der Dispergierung von Pigmenten in hochmolekularen Materialien kann eine Vielzahl von Problemen auftreten, insbesondere wenn die Pigmente sowohl in den herkömmlichen als auch in den neuartigen lösungsmittelarmen High-Solid- und hochpolaren wäßrigen Lacksystemen dispergiert werden sollen. So kann in einigen Lacksystemen die Dispergierung unvollständig bleiben, und die optimale Farbstärke wird nicht erreicht. Unvollständig dispergierte Agglomerate sowie große Teilchen können bei der Weiterverarbeitung stören, insbesondere können sie in niedrigviskosen Systemen (Lacken und Druckfarben) zu Sedimentationsproblemen führen. Desweiteren können Flockulationen bei der Dispergierung, Lagerung oder Weiterverarbeitung zu unerwünschten rheologischen Veränderungen des Systems sowie zu Oberflächenstörungen, Farbstärke- und Glanzverlusten eines applizierten Films führen.

Mit den bekannten Pigmentzubereitungen können diese Probleme nicht gelöst werden. Insbesondere bei der Dispergierung in den obengenannten neuartigen Lacksystemen treten erhebliche Probleme auf.

In der DE-OS 3 106 906 werden Pigmentzubereitungen beschrieben, die verbesserte Flockungsstabilität und günstige rheologische Eigenschaften in Lacksystemen besitzen. Die dort beschriebenen Pigmentzubereitungen führen in wäßrigen Lacksystemen in mehreren Fällen zu unbefriedigenden Resultaten, und das Verfahren ist bei einigen Pigmentklassen nicht anwendbar. Außerdem besitzen die dort genannten Verbindungen andere Strukturen.

Die DE-OS 2 905 114 beschreibt Pigmentzubereitungen auf Basis von Phthalimidomethylen-Gruppen enthaltenden Pigmentdispergatoren. Diese Pigmentzubereitungen erfüllen in vielen Fällen nicht die Anforderungen hinsichtlich der coloristischen und rheologischen Eigenschaften, die an Pigmentzubereitungen gestellt werden. Die dort genannten Verbindungen besitzen ebenfalls andere Strukturen.

Die GB-PS 1 367 635 beschreibt ortho-Sulfobenzoesäureimidomethylen-Gruppen enthaltende Chinophthalonfarbstoffe, die zum Färben von Fasern verwendet werden. Wegen der hohen Löslichkeit sind diese Verbindungen nicht zum Einsatz auf dem Pigmentgebiet geeignet.

Die Aufgabe der vorliegenden Erfindung besteht darin, neue Dispergatoren für organische Pigmente sowie daraus in einfacher Weise herstellbare Pigmentzubereitungen mit verbesserten coloristischen und rheologischen Eigenschaften in hochmolekularen Materialien zur Verfügung zu stellen. Es wurde nun gefunden, daß durch Oberflächenmodifizierung organischer Pigmente mit neuen Dispergatoren, die durch Reaktion von Hydroxymethylsaccharin oder Derivaten davon mit dem organischen Pigment hergestellt werden können, Pigmentzubereitungen mit hervorragenden coloristischen und rheologischen Eigenschaften in herkömmlichen als auch in modernen Bindemittelsystemen vom Typ High Solid oder auf wäßriger Basis erhalten werden.

Gegenstand der vorliegenden Erfindung sind Pigmentzubereitungen, bestehend im wesentlichen aus
a) mindestens einem organischen Pigment aus der Klasse der Azo-, Anthrapyrimidin-, Anthanthron-, Chinacridon-, Perinon-, Diketopyrrolopyrrol-, Dioxazin-, Flavanthron-, Indanthron-, Isoindolinon-, Isoviolanthron-, Perylen-, Phthalocyanin-, Pyranthron- oder Thioindigopigmente oder aus einer Mischung von Pigmenten, die unterschiedlichen der vorstehend genannten Klassen angehören, und
b) mindestens einem Dispergator der allgemeinen Formel (I) 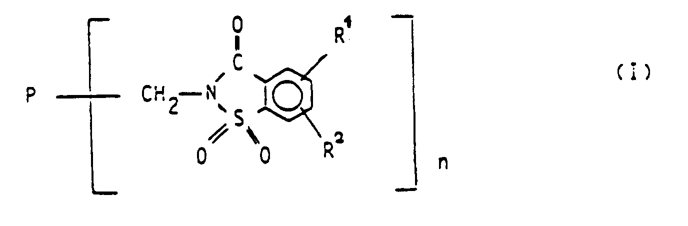 in der
   - P: unabhängig von den in a) genannten Pigmenten einen Rest eines Azo-, Anthanthron-, Chinacridon-, Perinon-, Diketopyrrolopyrrol-, Dioxazin-, Indanthron-, Perylen-, Phthalocyanin- oder Thioindigopigments darstellt,
   - R¹ und R²: unabhängig voneinander Wasserstoff, Halogen, C₁-C₄-Alkyl, C₁-C₄-Alkoxy oder Nitro, vorzugsweise Wasserstoff, bedeuten und
   - n: eine Zahl von 1 bis 4, vorzugsweise von 1 bis 3,6, ist
   und in der die CH₂-Gruppe des Saccharin-Restes an ein aromatisches C-Atom von P gebunden ist, wobei der Gehalt des Dispergators der Formel (I) zwischem 0,5 und 30 Gew.-%, bezogen auf des Gewicht des Pigments, liegt.

Unter "Rest" wird jeweils die Stammverbindung abzüglich mindestens eines Wasserstoffatoms verstanden.

Die vorstehend genannten Klassen organischer Pigmente sind literaturbekannt, beispielsweise aus W. Herbst, K. Hunger, Industrielle Organische Pigmente (1987), VCH Verlagsgesellschaft, Weinheim, Deutschland. Diketopyrrolopyrrol-Pigmente sind in der EP-B1-0 094 911 beschrieben.

Die Zahl n drückt den durch die Kondensation erreichten Substitutionsgrad der dem Rest P zugrundeliegenden Pigmentverbindung aus. Der optimale Wert für n ist abhängig von der chemischen Konstitution, von Kristall- und Oberflächeneigenschaften des Pigmentes sowie den Eigenschaften des Anwendungsmediums und muß für jede Kombination Pigment/Anwendungsmedium durch Versuche im Einzelfall ermittelt werden. Zu geringe oder zu hohe Werte von n führen nicht zu den optimalen Pigmenteigenschaften. Der Dispergator stellt normalerweise ein Gemisch von Verbindungen der Formel I dar, in dem durchschnittlich n Teile des Saccharinrestes an einen Teil des Pigmentrestes P gebunden sind. Aus diesem Grunde kann n auch gebrochene Zahlenwerte annehmen.

Bevorzugte Pigmentzubereitungen sind solche, die aus mindestens einem Pigment aus der Klasse der Indanthron-, Perylen-, Chinacridon-, Phthalocyanin- oder Perinonpigmente bestehen.

Bevorzugte Pigmentzubereitungen sind weiterhin solche, die aus mindestens einem Dispergator der allgemeinen Formel (I) bestehen, in der unabhängig von den verwendeten Pigmenten P einen Rest eines Indanthron-, Perylen-, Chinacridon-, Phthalocyanin- oder Perinonpigments bedeutet.

Bevorzugte Pigmentzubereitungen sind ferner solche, die im wesentlichen nur aus einem der genannten Pigmente und einem der genannten Dispergatoren bestehen.

Besonders bevorzugt sind Pigmentzubereitungen, bestehend aus
a) 99,5 bis 70 Gew.-%, vorzugsweise 95 bis 80 Gew.-%, mindestens eines der obengenannten Pigmente;
b) 0,5 bis 30 Gew.-%, vorzugsweise 5 bis 20 Gew.-%, mindestens eines der obengenannten Dispergatoren;
c) 0 bis 10 Gew.-%, vorzugsweise 0 bis 5 Gew.-%, eines oder mehrerer Tenside; und
d) 0 bis 10 Gew.-%, vorzugsweise 0 bis 5 Gew.-%, von üblichen Zusatzstoffen, wobei die Anteile der jeweiligen Komponenten auf das Gesamtgewicht (100 Gew.-%) der Pigmentzubereitung bezogen sind.

Gegenstand der vorliegenden Erfindung sind ferner Dispergatoren der allgemeinen Formel (I) 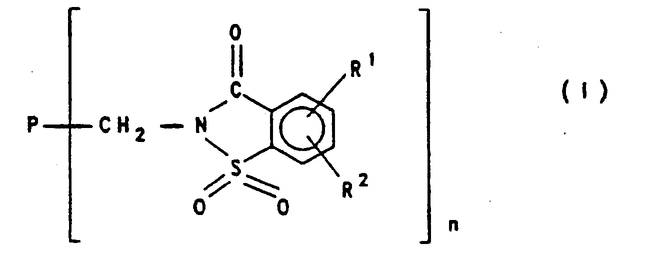 in der
- P: einen Rest eines Azo-, Anthanthron-, Perinon-, Diketopyrrolopyrrol-, Dioxazin-, Indanthron-, Perylen-, Phthalocyanin- oder Thioindigopigments darstellt,
- R¹ und R²: unabhängig voneinander Wasserstoff, Halogen, C₁-C₄-Alkyl, C₁-C₄-Alkoxy oder Nitro, vorzugsweise Wasserstoff, bedeuten und
- n: eine Zahl von 1 bis 4, vorzugsweise von 1 bis 3,6, ist
und in der die CH₂-Gruppe des Saccharin-Restes mit einem aromatischen C-Atom von P verbunden ist.

Die Dispergatoren mit der allgemeinen Formel I können nach üblichen Verfahren durch Kondensation von Pigmenten mit dem entsprechenden Saccharin-Derivat und Formaldehyd, Paraformaldehyd, einer anderen Formaldehyd freisetzenden Verbindung, beispielsweise Trioxan, oder dem entsprechenden N-Methylolderivat des Saccharins in Gegenwart von Kondensationsmitteln bei einer Temperatur zwischen 0°C und 150°C hergestellt werden. Bevorzugte Kondensationsmittel sind 80 bis 100 gew.-%ige Schwefelsäure, Oleum oder Polyphosphorsäure. Das Kondensationsprodukt wird durch Eintragen der schwefel- oder phosphorsauren Lösung in Wasser oder Eis/Wasser gefällt und durch Filtrieren und Neutralwaschen in üblicher Weise isoliert. Die Bestimmung des Substitutionsgrades kann mit Hilfe von Elementaranalysen und NMR-Spektren erfolgen.

Bei der Verwendung von konzentrierter Schwefelsäure oder Oleum als Kondensationsmedium können in geringem Umfang Sulfonsäuregruppen in die erfindungsgemäßen Verbindungen eingebaut werden.

Der Substitutionsgrad n des Pigments P kann auf dem direkten Weg erreicht werden. Es kann aber auch ein Derivat der Formel I hergestellt und in einem weiteren Schritt auf den endgültigen Substitutionsgrad n eingestellt werden. Diese Einstellung des Substitutionsgrades n kann bei einem nachfolgenden Verfahrensschritt (Feinverteilung, Finish, Naß- oder Trockenmahlung, Endmischung) erfolgen.

Bei der Herstellung der Pigmentzubereitungen können die Dispergatoren während der Pigmentsynthese, während des Feinverteilungsprozesses, vor oder nach einem Finishprozeß zugesetzt werden. Die Feinverteilung kann in einem mechanischen Prozeß, beispielsweise einer Naß- oder Trockenmahlung, oder einem chemischen Prozeß, beispielsweise Auflösen in starken Säuren oder Laugen, und Ausfällen oder durch Umküpen erfolgen. Die Pigmentzubereitungen können auch durch Mischen der Dispergatoren mit den Pigmenten hergestellt werden.

Die in den erfindungsgemäßen Pigmentzubereitungen enthaltenen Pigmente können als reine Pigmente, als Mischungen aus mindestens zwei Pigmenten oder als Mischkristalle aus mindestens zwei Pigmenten vorliegen.

Der Gehalt der Dispergatoren in den Pigmentzubereitungen liegt zwischen 0,5 und 30 Gew.-%, vorzugsweise 1 und 15 Gew.-%, bezogen auf das Gewicht des Pigments. Die Verbesserung der coloristischen und rheologischen Eigenschaften durch den Zusatz des Dispergators geht mit steigender Menge einher, jedoch nur bis zu einer bestimmten optimalen Konzentration, die von der chemischen Konstitution, von Kristall- und Oberflächeneigenschaften des Pigmentes, des Dispergators, sowie den Eigenschaften des Anwendungsmediums abhängt und für jede Kombination Pigment/Dispergator/Anwendungsmedium durch Versuche im Einzelfall ermittelt werden kann.

Höhere Konzentrationen führen wieder zu einer Verschlechterung der Eigenschaften. In den Pigmentzubereitungen können sich die Dispergatoren der allgemeinen Formel (I) von dem in der Zubereitung vorhandenen Pigment oder von einer anderen Verbindung aus den vorstehend genannten Pigmentklassen ableiten. In jedem Falle wird durch den Zusatz des Dispergators eine Verbesserung der coloristischen und rheologischen Eigenschaften erzielt. Jedoch können sich die Farbtöne durch die Dispergatoren verschieben, insbesondere wenn sie sich von Pigmenten ableiten, die vom Pigment der Pigmentzubereitung verschieden sind, so daß in einer bevorzugten Ausführungsform die vorstehend in a) und b) genannten Pigmente jeweils derselben Klasse angehören.

Die erfindungsgemäßen Pigmentzubereitungen können auch noch Tenside und weitere übliche Zusatzstoffe, wie Harze, rheologische Additive, Konservierungsmittel und/oder Antistaubmittel, enthalten, wie sie beispielsweise in K. Lindner, Tenside-Textilhilfsmittel-Waschrohstoffe, Band 1, Seiten 837-917 (1964) oder in N. Schönfeld, Grenzflächenaktive Ethylenoxid-Addukte, Seiten 42-95 (1976) beschrieben sind.

Die erfindungsgemäßen Pigmentzubereitungen zeichnen sich durch ihre hervorragenden coloristischen und rheologischen Eigenschaften aus, insbesondere der Flockungsstabilität, Dispergierbarkeit, Rheologie, Glanzverhalten und Farbstärke.

Die erfindungsgemäßen Pigmentzubereitungen eignen sich besonders zum Pigmentieren von hochmolekularen organischen Materialien, beispielsweise Celluloseether und Celluloseester, wie Ethylcellulose, Nitrocellulose, Celluloseacetat, Cellulosebutyrat, natürliche Harze oder Kunstharze, wie Polymerisationsharze oder Kondensationsharze, beispielsweise Aminoplaste, insbesondere Harnstoff- und Melamin-Formaldehyd-Harze, Alkydharze, Acrylharze, Phenoplaste, Polycarbonate, Polyethylen, Polypropylen, Polyacrylnitril, Polyacrylsäureester, Polyamide, Polyurethane oder Polyester, Gummi, Casein, Silikon und Silikonharze, sowohl einzeln als auch in Mischungen untereinander.

Es spielt dabei keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäßen Pigmentzubereitungen als Toner oder in Form von Präparationen oder Dispersionen einzusetzen. Bezogen auf das zu pigmentierende hochmolekulare organische Material setzt man die Pigmentzubereitungen in einer Menge von vorzugsweise 0,1 bis 10 Gew.-% ein. Besonders bevorzugte Lacksysteme sind die neuartigen hochpolaren, wäßrigen Lacke auf Polyurethanbasis sowie die lösungsmittelarmen High-Solid-Acrylharzlacke mit hohem Festkörperanteil. Geeignet sind auch die herkömmlichen Lacksysteme aus der Klasse der Alkydmelaminharzlacke und Zweikomponentenlacke auf Basis von mit Polyisocyanat vernetzbaren Acrylharzen. Von der Vielzahl der Druckfarben sind solche auf Basis von Nitrocellulose besonders geeignet.

Die erfindungsgemäßen Pigmentzubereitungen und die erfindungsgemäßen Dispergatoren sind in vielen Anwendungsmedien leicht und bis zu hohen Feinheiten dispergierbar. Diese Dispersionen besitzen eine hohe Flockungsstabilität und zeigen hervorragende rheologische Eigenschaften selbst bei hoher Pigmentierung. Mit ihnen lassen sich Lackierungen und Drucke von hoher Farbstärke, hohem Glanz und hoher Transparenz mit hervorragenden Echtheitseigenschaften herstellen. Zur Beurteilung der Eigenschaften wurden aus der Vielzahl der bekannten Systeme ein Alkydmelaminharzlack (AM) auf Basis eines mittelöligen, nichttrocknenden Alkydharzes aus synthetischen Fettsäuren und Phthalsäureanhydrid und eines butanolveretherten Melaminharzes und Anteilen eines nichttrocknenden Alkydharzes auf Basis von Ricinensäure (kurzölig), ein High-Solid-Acrylharzeinbrennlack auf Basis einer nicht-wäßrigen Dispersion (TSA) sowie ein wäßriger Lack auf Polyurethanbasis (PUR) ausgewählt.

Die Rheologie des Mahlguts nach der Dispergierung wird anhand der folgenden fünfstufigen Skala beurteilt:

| | | | |
|---|---|---|---|
| 5 | dünnflüssig | 2 | leicht gestockt |
| 4 | flüssig | 1 | gestockt |
| 3 | dickflüssig | | |

Nach dem Verdünnen des Mahlguts auf die Pigmentkonzentration wird die Viskosität mit dem Viskospatel nach Rossmann, beispielsweise vom Typ 301 der Firma Erichsen, Iserlohn, beurteilt. Vor der Lackierung wurde die gewünschte Viskosität so eingestellt, daß sie einer bestimmten Auslaufzeit im Fordbecher (Düse 4 mm Durchmesser), angegeben in Sekunden (s), entsprach. Glanzmessungen erfolgten unter einem Winkel von 20° nach DIN 67530 (ASTMD 523) mit dem "multigloss"-Glanzmeßgerät, beispielsweise der Firma Byk-Mallinckrodt, Wesel. In den nachstehenden Beispielen bedeuten Teile Gewichtsteile und Prozentangaben Gewichtsprozent.

Unter 6 bzw. 3%igem Oleum versteht man eine Lösung von 94 bzw. 97 Gew.-% Schwefelsäure (100 %ig) und 6 bzw. 3 Gew.-% gelöstem SO₃.

Der Substitutionsgrad n wurde in allen Beispielen sowohl durch Elementaranalyse als auch durch ¹H-NMR-Spektren, wobei das Verhältnis der aliphatischen zu den aromatischen Protonen für die Bestimmung zugrundegelegt wurde, ermittelt.

### Beispiel 1

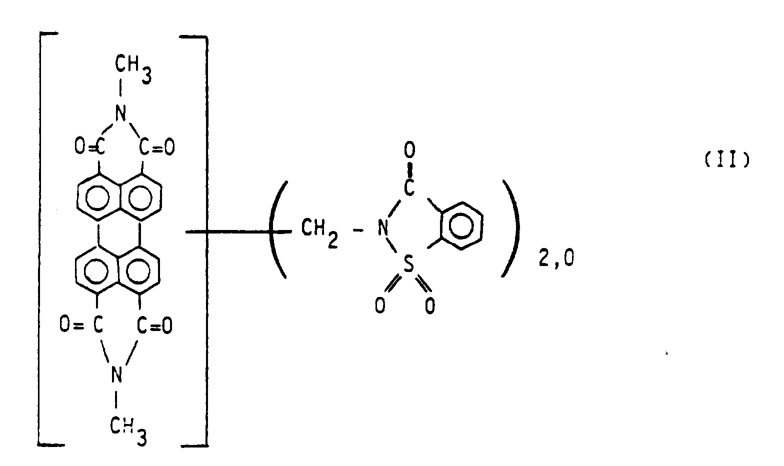

In einem Rührgefäß wurden 300 g 6 %iges Oleum vorgelegt und danach bei einer Temperatur von 25°C 20,9 g (0,05 mol) Perylentetracarbonsäure-N,N'-dimethylimid eingetragen und gelöst. Anschließend gab man 42,6 g (0,2 mol) Hydroxymethylsaccharin dazu, heizte auf 100°C und rührte 4 Stunden bei dieser Temperatur nach. Man ließ auf 25°C abkühlen, goß die Lösung auf 2000 g Eiswasser, saugte ab und wusch neutral. Der Filterrückstand wurde mit 250 ml Wasser angerührt, mit 2,25 g Natronlauge (33 %ig) auf pH 9 gestellt, 1 Stunde nachgerührt, abgesaugt, neutral gewaschen und getrocknet. Man erhielt 40,85 g Dispergator der Formel II.

| Analyse: | | | | |
|---|---|---|---|---|
| Ber.: | C 62,4 %, | H 3,0 %, | N 6,9 %, | S 7,9 % |
| Gef.: | C 61,2 %, | H 2,9 %, | N 6,7 %, | S 8,0 %. |

¹H-NMR-Spektrum in D₂SO₄ (in ppm):
δ 7,5 - 9,3: 14 aromatische H; 4,5 - 6,0: 2 aliphatische CH₂; 3,5 - 3,9: 2 CH₃.

### Beispiel 1a

15 g C.I. Pigment Red 179, hergestellt gemäß der EP-A1-0318022, wurden mit 0,15 g Dispergator der Formel (II) mechanisch gemischt und die Pigmentzubereitung im AM-Lack und PUR-Lack ausgeprüft. Man erhielt im AM-Lack eine deckende, farbstarke Lackierung. Die Rheologie wurde mit 5 bewertet, der Glanz betrug 81.
Ohne Dispergator war die Lackierung deutlich farbschwächer, die Rheologie wurde mit 1 bis 2 bewertet, und der Glanz betrug 35.
Ersetzte man den Dispergator der Formel (II) durch einen Dispergator auf der Basis Perylentetracarbonsäure-N,N'-dimethylimid und Hydroxymethylphthalimid mit dem Substitutionsgrad n = 2,6, hergestellt gemäß der DE-AS 2 905 114, Beispiel A, Versuch B, so erhielt man eine Lackierung, die deutlich farbschwächer war als die mit dem Dispergator der Formel II. Die Rheologie wurde mit 5 bewertet und der Glanz betrug 78.

Im PUR-Lack erhielt man mit der eingangs dieses Beispiels beschriebenen Pigmentzubereitung eine deckende und farbstarke Lackierung. Die Rheologie wurde mit 5 bewertet und die Viskosität betrug 3,0 s. Ohne Dispergator war die Lackierung etwas farbschwächer. Die Rheologie wurde mit 5 bewertet und die Viskosität betrug 3,5 s.

Ersetzte man den Dispergator der Formel (II) durch einen Dispergator auf der Basis Perylentetracarbonsäure-N,N'-dimethylimid und Hydroxymethylphthalimid, so erhielt man eine deutlich farbschwächere Lackierung. Die Rheologie wurde mit 5 bewertet und die Viskosität betrug 2,2 s.

### Beispiel 2

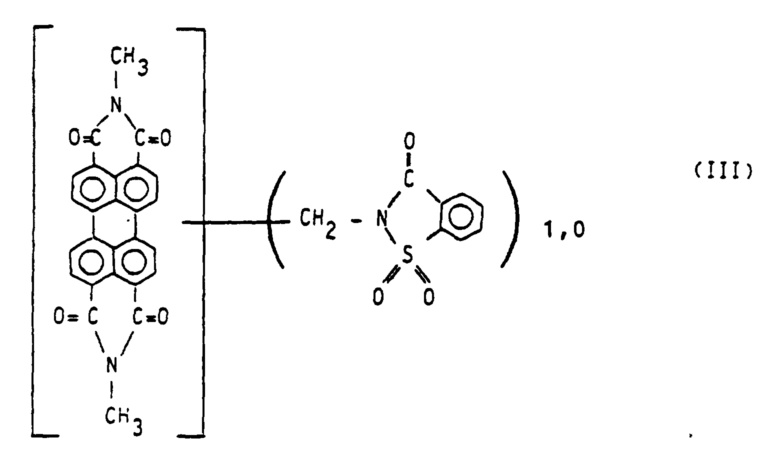

In einem Rührgefäß wurden 300 g 6 %iges Oleum vorgelegt und danach bei einer Temperatur von 25°C 20,9 g (0,05 mol) Perylentetracarbonsäure-N,N'-dimethylimid eingetragen und gelöst. Anschließend gab man eine Mischung aus 6 g Paraformaldehyd (entsprechend 0,2 mol Formaldehyd) und 36,6 g (0,2 mol) Saccharin dazu, heizte auf 100°C und rührte 4 Stunden bei dieser Temperatur nach. Man ließ auf 25°C abkühlen, goß die Lösung auf 2000 g Eiswasser, saugte ab und wusch neutral. Der Filterrückstand wurde mit 250 ml Wasser angerührt, mit 2,25 g Natronlauge (33 %ig) auf pH 9 gestellt, 1 Stunde nachgerührt, abgesaugt, neutral gewaschen und getrocknet. Man erhielt 25,8 g Dispergator der Formel (III), der noch etwa 50 % unsubstituiertes Perylentetracarbonsäure-N,N'-dimethylimid enthielt.

Analyse (berechnet für die 1:1-Mischung aus (III) und unsubstituiertem Edukt):

| | | | | |
|---|---|---|---|---|
| Ber.: | C 69.8 %, | H 3,2 %, | N 6,8 %, | S 3,1 % |
| Gef.: | C 68,4 %, | H 2,9 %, | N 6,6 %, | S 2,9 %. |

¹H-NMR-Spektrum in D₂SO₄ (in ppm):
δ 7,6 - 9,3: 19 aromatische H; 4,5 - 5,8: 1 aliphatisches CH₂.

### Beispiel 2a

15 g C.I. Pigment Red 179, hergestellt gemäß der EP-A1-0 318 022 wurden mit 0,15 g Dispergator der Formel (III) mechanisch gemischt und die Pigmentzubereitung im AM-Lack ausgeprüft. Man erhielt eine deckende, farbstarke Lackierung. Die Rheologie wurde mit 4 bis 5 bewertet, die Viskosität betrug 3,53 s und der Glanz 74.

Ohne Dispergator war die Lackierung farbschwächer, die Rheologie wurde mit 1 bis 2 bewertet, die Viskosität betrug 4,3 s und der Glanz 35.

### Beispiel 3

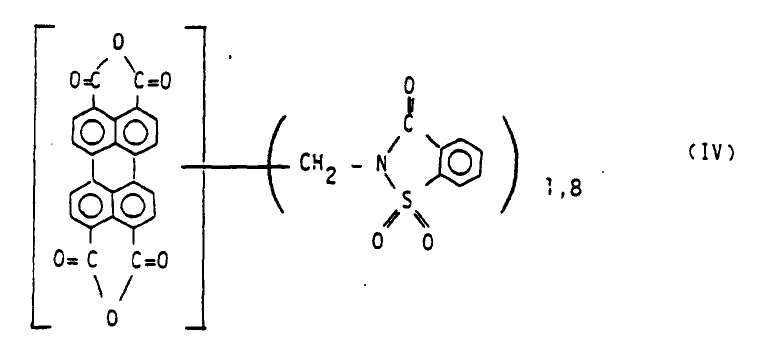

In einem Rührgefäß wurden 300 g 6 %iges Oleum vorgelegt und danach bei einer Temperatur von 25°C 19,6 g (0,05 mol) Perylentetracarbonsäuredianhydrid eingetragen und gelöst. Anschließend gab man 42,6 g (0,2 mol) Hydroxymethylsaccharin dazu, heizte auf 100°C und rührte 4 Stunden bei dieser Temperatur nach. Man ließ auf 25°C abkühlen, goß die Lösung auf 2000 g Eiswasser, saugte ab, wusch neutral und trocknete. Man erhielt 37,4 g Dispergator der Formel (IV).

| Analyse: | | | | |
|---|---|---|---|---|
| Ber.: | C 62,0 %, | H 2,3 %, | N 3,4 %, | S 7,8 % |
| Gef.: | C 60,9 %, | H 2,6 %, | N 3,4 %, | S 7,2 %. |

¹H-NMR-Spektrum in D₂SO₄ (in ppm):
δ 7,6 - 9,2: etwa 13 aromatische H; 5,0 - 6,1: etwa 1,8 aliphatische CH₂.

### Beispiel 3a

In einem Rührgefäß wurden 1050 ml entmineralisiertes Wasser vorgelegt und danach unter Rühren 50 g Perylentetracarbonsäuredianhydrid, hergestellt gemäß der EP-A-205 980, und 0,5 g Dispergator der Formel (IV), beide in Form des feuchten Preßkuchens, eingetragen. Es wurde auf eine Temperatur von 0 bis 5°C abgekühlt, und bei dieser Temperatur wurden in 10 Minuten 104 g 40 %ige Monomethylaminlösung zugetropft und 15 Minuten bei 0 bis 5°C nachgerührt. Danach wurde bei 0 bis 5°C in 15 Minuten eine Lösung aus 28,5 g Calciumchlorid, wasserfrei, und 94,5 ml Wasser zugetropft und 1 Stunde bei dieser Temperatur nachgerührt. Anschließend wurde auf 80°C geheizt und 1 Stunde bei etwa 80°C nachgerührt. Danach wurde eine Suspension aus 2,7 g Distearyldimethylammoniumchlorid und 117 ml Wasser zugetropft und 1 Stunde bei 80°C nachgerührt. Es wurde auf 50°C abgekühlt, durch Zutropfen von 98 %iger Ameisensäure ein pH-Wert von 7 bis 7,5 eingestellt, 30 Minuten bei 50°C nachgerührt, abgesaugt, mit Wasser chloridfrei gewaschen und getrocknet.

Man erhielt 54,2 g einer Pigmentzubereitung auf Basis von Pigment Red 179, die im TSA-Lack transparente und farbstarke Lackierungen lieferte. Nach Umsetzung hatte der Dispergator die allgemeine Formel II, wobei jedoch n die Zahl 1,8 war.

### Beispiel 4

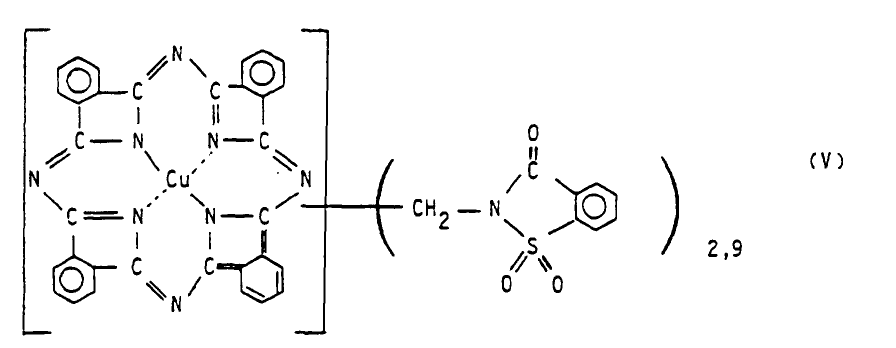

In einem Rührgefäß wurden 400 g 96 %ige Schwefelsäure vorgelegt und danach bei einer Temperatur von 25°C 28,7 g (0,05 mol) Kupferphthalocyanin eingetragen und gelöst. Anschließend gab man 42,6 g (0,2 mol) Hydroxymethylsaccharin dazu, heizte auf 50 bis 55°C und rührte 5 Stunden bei dieser Temperatur nach. Man ließ auf 25°C abkühlen, goß die Lösung auf 2000 g Eiswasser, saugte ab und wusch neutral. Der Filterrückstand wurde mit 1000 ml Wasser angerührt, mit 1,24 g Natronlauge (33 %ig) auf pH 11 gestellt, 1 Stunde nachgerührt, abgesaugt, neutral gewaschen und getrocknet.
Man erhielt 57,0 g Dispergator der Formel (V).

| Analyse: | | | | |
|---|---|---|---|---|
| Ber.: | C 58,1 %, | H 2,7 %, | N 13,4 %, | S 8,1 % |
| Gef.: | C 58,1 %, | H 3,3 %, | N 13,9 %, | S 7,2 %. |

### Beispiel 4a

In ein 1-Liter Porzellangefäß wurden 35 g Kupferphthalocyanin-Rohpigment der β-Phase, 10,6 g Dispergator der Formel (V), 165 ml Wasser und 1200 g Quarzperlen vom Durchmesser 2 mm eingefüllt und danach 15 Stunden auf einer Schwingmühle gemahlen. Anschließend wurde das Mahlgut von den Quarzitperlen abgesiebt, abgesaugt und getrocknet. Man erhielt 36,4 g Pigmentzubereitung, die im AM-, TSA- und PUR-Lack farbstarke Lackierungen lieferte. Ohne Dispergator waren die Lackierungen deutlich farbschwächer. Die Rheologie und die Viskositäten der Lacke waren mit und ohne Dispergator gleich.

### Beispiel 4b

In einem Rührgefäß wurden nacheinander 75 g Isobutanol (85 %ig), 50 g feinteiliges Mahlgut C.I. Pigment Violet 23 (mit 22 % Salz aus der Synthese), hergestellt gemäß der DE-PS 27 42 575, 2,5 g Dispergator der Formel (V) als Preßkuchen und 2,5 g Ameisensäure (98 %ig) eingetragen und 22 Stunden bei 25°C gerührt. Während dieser Zeit wurden noch 100 g Isobutanol (85 %ig) zugetropft. Anschließend gab man 300 ml Wasser zu und erhitzte 5 Stunden zum Sieden. Danach wurde das Isobutanol abdestilliert und der Rückstand abgesaugt, neutral gewaschen und getrocknet.

Man erhielt 40,4 g Pigmentzubereitung, die in Polyvinylchlorid transparente und farbstarke Färbungen liefert.

### Beispiel 5

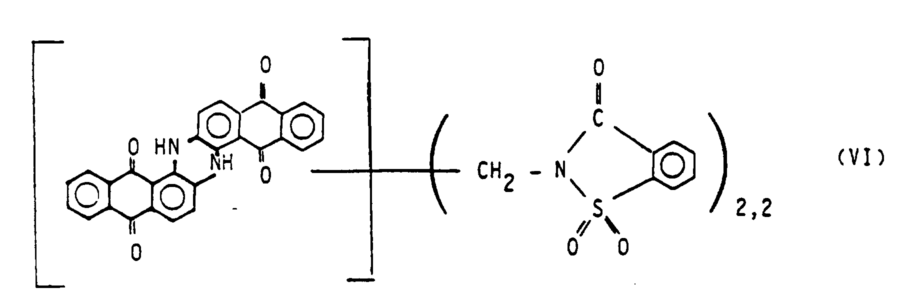

In einem Rührgefäß wurden 100 g 3 %iges Oleum vorgelegt und danach bei einer Temperatur von 25°C 10 g (0,02 mol) Indanthron eingetragen und gelöst. Anschließend gab man 19,3 g (0,09 mol) Hydroxymethylsaccharin dazu, heizte auf 60°C und rührte 4 Stunden bei dieser Temperatur nach. Man ließ auf 25°C abkühlen, goß die Lösung auf 500 g Eiswasser, saugte ab und wusch mit Wasser neutral. Der Filterrückstand wurde mit 250 ml Wasser angerührt, mit 2,0 g Natronlauge (33 %ig) auf pH 9 gestellt, 1 Stunde nachgerührt, abgesaugt, mit Wasser neutral gewaschen und getrocknet. Man erhielt 20,6 g Dispergator der Formel (VI).

| Analyse: | | | | |
|---|---|---|---|---|
| Ber.: | C 62,6 %, | H 2,9 %, | N 7,1 % | S 8,1 % |
| Gef.: | C 61,0 %, | H 2,9 %, | N 6,2 %, | S 8,6 %. |

¹H-NMR-Spektrum in D₂SO₄ (in ppm): δ 7,5 - 9,0: etwa 18 aromatische H; 5,0: etwa 2 CH₂.
Setzte man anstelle von Hydroxymethylsaccharin die gleiche molare Menge 4-Chlorhydroxymethylsaccharin ein, so erhielt man einen Dispergator mit ähnlichen Eigenschaften.

### Beispiel 5a

In eine 1,4-Liter Rollmühle wurden 3200 g Stahlkugeln vom Durchmesser 1 gegeben, 27 g aus Schwefelsäure umkristallisiertes Indanthron-Rohpigment un Pigmentzubereitung im AM-Lack und PUR-Lack ausgeprüft. Man erhielt im AM-Lac Drehzahl betrug 70 % der kritischen Drehzahl. Anschließend wurde das Mahlgut durch Sieben von den Mahlkörpern abgetrennt, in 40 g 85 %iges Isobutanol eingetragen und 24 Stunden bei 25°C gerührt. Man gab 150 ml Wasser und 5 g Ameisensäure (98 %ig) zu, erhitzte 5 Stunden zum Sieden und destillierte das Isobutanol ab. Anschließend wurde abgesaugt, mit Wasser neutral gewaschen und getrocknet. Man erhielt eine Pigmentzubereitung, die im TSA-Lack transparente und farbstarke Lackierungen liefert.

### Beispiel 6

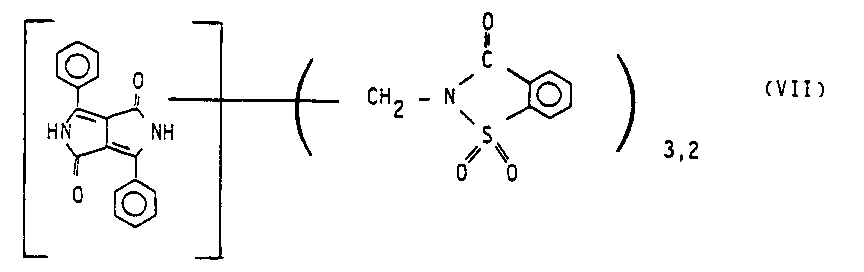

In einem Rührgefäß wurden 150 g 100 %ige Schwefelsäure vorgelegt und danach bei einer Temperatur von 25°C 7,2 g (0,03 mol) Diketopyrrolopyrrol eingetragen und gelöst. Anschließend gab man 21,3 g (0,1 mol) Hydroxymethylsaccharin dazu, heizte auf 50°C und rührte 5 Stunden bei dieser Temperatur nach. Man ließ auf 25°C abkühlen, goß die Lösung auf 1500 g Eiswasser, saugte ab, wusch mit Wasser neutral und trocknete. Man erhielt 22,6 g Dispergator der Formel (VII).

| Analyse: | | | | |
|---|---|---|---|---|
| Ber.: | C 57,4 %, | H 3,1 %, | N 8,0 %, | S 11,2 % |
| Gef.: | C 55,9 %, | H 3,2 %, | N 8,1 %, | S 10,9 %. |

¹H-NMR-Spektrum in D₂SO₄ (in ppm): δ 7,0 - 8,6: etwa 19 aromatische H; 4,6 - 6,2: etwa 3 CH₂.
Setzte man anstelle von Hydroxymethylsaccharin die gleiche molare Menge 4-Methoxy-7-nitro-hydroxymethylsaccharin ein, so erhielt man einen Dispergator mit ähnlichen Eigenschaften.

### Beispiel 6a

9,75 g C.I. Pigment Red 254 wurden mit 0,25 g Dispergator der Formel (VII) mechanisch gemischt und die Pigmentzubereitung im AM-Lack ausgeprüft. Man erhielt eine farbstarke Lackierung. Die Rheologie wurde mit 5 bewertet und der Glanz betrug 75.

### Beispiel 7

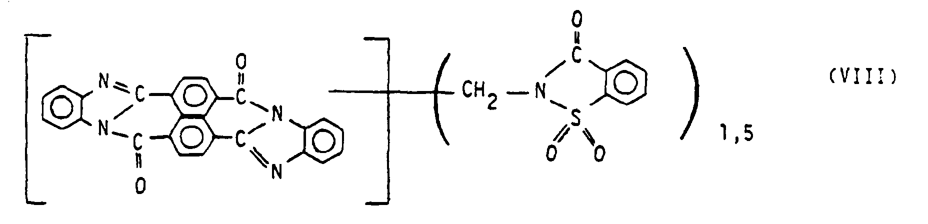

In einem Rührgefäß wurden 250 g 100 %ige Schwefelsäure vorgelegt und danach bei 25°C 20,6 g (0,05 mol) C.I. Pigment Orange 43 eingetragen und gelöst. Anschließend gab man 42,6 g (0,2 mol) Hydroxymethylsaccharin dazu, heizte auf 105°C und rührte 4 Stunden bei dieser Temperatur nach. Man ließ auf 25°C abkühlen, goß die Lösung auf 2000 g Eiswasser, saugte ab und wusch neutral. Der Filterrückstand wurde mit 250 ml Wasser angerührt, mit 7,5 g Natronlauge (33 %ig) auf pH 13,6 gestellt, 1 Stunde nachgerührt, abgesaugt, neutral gewaschen und getrocknet. Man erhielt 35,6 g Dispergator der Formel (VIII).

| Analyse: | | | | |
|---|---|---|---|---|
| Ber.: | C 64,7 %, | H 2,8 %, | N 10,9 %, | S 6,8 % |
| Gef.: | C 63,3 %, | H 2,9 %, | N 11,1 %, | S 6,9 %. |

¹H-NMR-Spektrum in D₂SO₄ (in ppm): δ 7,5 - 9,2: etwa 16,5 aromatische H; 5,0 - 5,4: 3 aliphatische H.
Setzte man anstelle von Hydroxymethylsaccharin die gleiche molare Menge a hydroxymethylsaccharin ein, so erhielt man einen Dispergator mit ähnlichen Eigenschaften.

### Beispiel 7a

9,5 g C.I. Pigment Orange 43 wurden mit 0,5 g Dispergator der Formel (VIII) mechanisch gemischt und die Pigmentzubereitung im AM-Lack und im PUR-Lack ausgeprüft. Man erhielt im AM-Lack eine transparente, farbstarke Lackierung mit einwandfreier Überlackierechtheit. Die Rheologie wurde mit 5 bewertet und der Glanz betrug 83.
Ohne Dispergator war die Lackierung wesentlich deckender, heller und farbschwächer. Die Rheologie wurde mit 1 bewertet und der Glanz betrug 25. Im PUR-Lack erhielt man eine transparente und farbstarke Lackierung. Die Rheologie wurde mit 5 bewertet und der Glanz betrug 80. Ohne Dispergator war die Lackierung wesentlich deckender, heller und farbschwächer. Die Rheologie wurde mit 1 bis 2 bewertet und der Glanz betrug 42.
Ersetzte man den Dispergator der Formel (VIII) durch einen Dispergator auf Basis von C.I. Pigment Orange 43, Hydroxymethylhalogenfettsäureamiden und Aminen mit basischen Gruppen, hergestellt gemäß der US-PS 3 973 981 (Beispiel 1, Herstellung 5) so erhielt man im AM-Lack eine Lackierung, die wesentlich dunkler und trüber ist als die mit dem Dispergator der Formel (VIII). Die Rheologie wurde mit 4 bis 5 bewertet und der Glanz betrug 46.

### Beispiel 7b

76 g eines 4,10-Dibromanthanthron-Rohpigments in Form eines feuchten Preßkuchens wurden mit 130 ml Wasser angerührt. Zu dieser Suspension gab man 4 g Dispergator der Formel (VIII) und 5 g Ameisensäure (98 %ig) und rührte 15 Minuten nach. Anschließend füllte man diese Suspension in eine Perlmühle, die mit 1160 g Quarzitperlen vom Durchmesser 1 mm gefüllt war und mahlte 2 Stunden bei einer Drehzahl von 2800 Umdrehungen pro Minute. Danach wurde das Mahlgut abgesiebt und die Quarzitperlen mit Wasser nachgespült. Man saugte die Suspension ab und wusch mit Wasser nach. Der Filterkuchen wurde danach mit soviel Wasser angerührt, daß das Gewicht der Suspension 960 g betrug. Danach gab man 240 g n-Butanol (100 %ig) zu und erhitzte 3 Stunden zum Sieden. Anschließend destillierte man das n-Butanol ab, saugte bei 50°C ab, wusch mit Wasser nach und trocknete bei 80°C. Man erhielt 79,3 g Pigmentzubereitung. Bei der Ausprüfung im AM-Lack erhielt man farbstarke Lackierungen. Die Rheologie wurde mit 4 bis 5 bewertet, und der Glanz betrug 70.
Verzichtete man bei der Herstellung der Pigmentzubereitung auf den Dispergator, so erhielt man eine deutlich farbschwächere Lackierung. Die Rheologie wurde mit 1 bewertet und der Glanz betrug 64.

### Beispiel 8

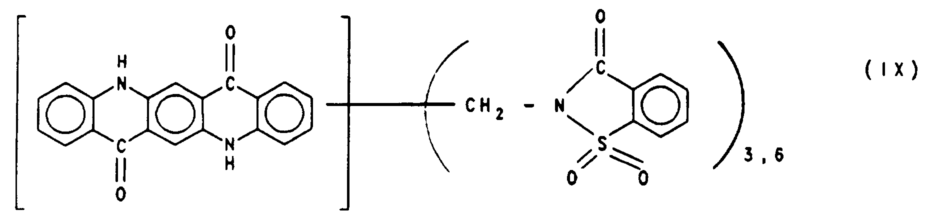

In einem Rührgefäß wurden 350 g Polyphosphorsäure (82 bis 84 % P₂O₅) vorgelegt und auf 125°C geheizt. Bei dieser Temperatur wurden in 1 Stunde 17,4 g (0,05 mol) 2,5-Dianilinoterephthalsäure eingetragen. Es wurde 1 Stunde bei 125°C nachgerührt. Danach wurde auf 80°C abgekühlt und bei dieser Temperatur wurden in 30 Minuten 42,6 g (0,2 mol) Hydroxymethylsaccharin eingetragen. Anschließend wurde auf 120°C geheizt und 4 Stunden bei dieser Temperatur nachgerührt. Nach beendeter Reaktion wurde die Lösung auf 2000 g Eiswasser gegossen, 1 Stunde nachgerührt, abgesaugt, neutral gewaschen und getrocknet. Man erhielt 50,7 g Dispergator der Formel (IX).

| Analyse: | | | | |
|---|---|---|---|---|
| Ber.: | C 57,6 %, | H 3,0 %, | N 7,7 %, | S 11,3 % |
| Gef.: | C 56,8 %, | H 3,0 %, | N 7,5 %, | S 10,2 %. |

¹H-NMR-Spektrum in D₂SO₄ (in ppm): δ 7,4 - 9,6: etwa 20 aromatische H; 4,9 - 5,8: etwa 7 aliphatische H.
Setzte man anstelle von Hydroxymethylsaccharin die gleiche molare Menge an 5,0 - 5,4: 3 aliphatische H. ähnlichen Eigenschaften. hydroxymethylsaccharin

### Beispiel 8a

44 g eines 2,9-Dimethylchinacridon-Rohpigmentes in Form eines feuchten Preßkuchens wurden mit 270 g Isobutanol (100 %ig) angerührt. In diese Suspension trug man 4,4 g Dispergator der Formel (IX) in Form des feuchten Preßkuchens ein und tropfte 6,6 g 33 %ige Natronlauge zu. Anschließend heizte man im Autoklaven auf 125°C und rührte 3 Stunden bei dieser Temperatur nach. Danach kühlte man auf 90°C ab und destillierte das Isobutanol ab. Man kühlte auf 50°C ab, saugte bei dieser Temperatur die Pigmentzubereitung ab, wusch mit Wasser neutral und trocknete bei 80°C. Man erhielt 46,2 g Pigmentzubereitung.
Bei der Ausprüfung im PUR-Lack wurde eine transparente und farbstarke Lackierung erhalten. Die Rheologie wurde mit 4 bewertet.
Ohne Dispergator war die Lackierung deckender und farbschwächer. Die Rheologie wurde mit 4 bewertet.
Ersetzte man den Dispergator der Formel IX durch einen Dispergator auf der Basis von Chinacridonsulfonsäureamiden, hergestellt gemäß der DE-OS 31 06 906, Herstellungsbeispiel 1, so erhielt man wesentlich farbschwächere Lackierungen. Im AM-Lack erhielt man eine farbstarke Lackierung. Ohne Dispergator war die Lackierung etwas farbschwächer.

### Beispiel 9

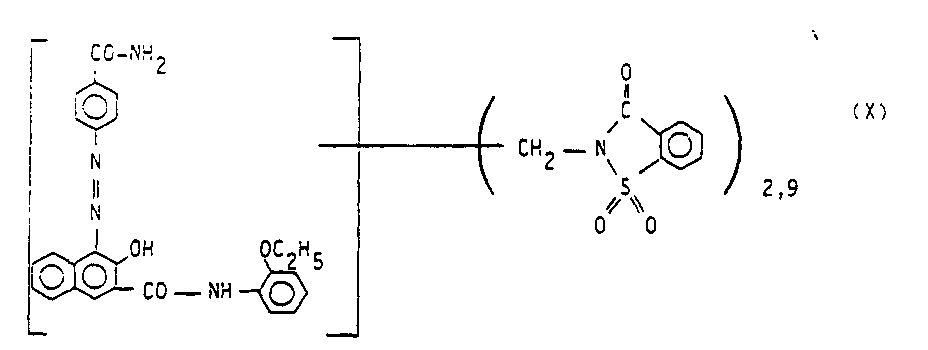

In einem Rührgefäß wurden 150 g Polyphosphorsäure (82 bis 84 % P₂O₅) vorgelegt und danach bei 80°C 5,7 g (0,01 mol) C.I. Pigment Red 170 eingetragen und gelöst. Anschließend gab man 10,7 g (0,05 mol) Hydroxymethylsaccharin dazu, heizte auf 95°C bis 100°C und rührte 4 Stunden bei dieser Temperatur. Man goß die Lösung auf 1000 g Eiswasser, saugte ab, wusch neutral und trocknete bei 80°C. Man erhielt 12,8 g Dispergator der Formel (X).

| Analyse: | | | | |
|---|---|---|---|---|
| Ber.: | C 57,9 %, | H 3,6 %, | N 9,5 %, | S 9,7 % |
| Gef.: | C 56,7 %, | H 3,6 %, | N 8,3 %, | S 9,0 %. |

¹H-NMR-Spektrum in D₂SO₄ (in ppm): δ 7,4 - 9,2: etwa 22 aromatische H; 4,7 - 6,0: etwa 6 H.

### Beispiel 9a

9,5 g C.I. Pigment Red 170 wurden mit 0,5 g Dispergator der Formel (X) mechanisch gemischt und die Pigmentzubereitung im AM-Lack ausgeprüft. Man erhielt eine farbstarke Lackierung. Die Rheologie wurde mit 4 bewertet und der Glanz betrug 77. Ohne Dispergator war die Lackierung heller, die Rheologie wurde mit 2 bewertet und der Glanz betrug 75.

### Beispiel 10

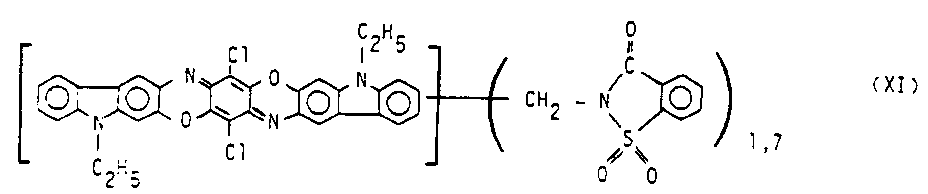

In einem Rührgefäß wurden 1200 g Polyphosphorsäure (82 bis 84 % P₂O₅) vorgelegt, auf 80°C geheizt und bei dieser Temperatur wurden in 1/2 Stunde 22,1 g salzfreies C.l. Pigment Violet 23 eingetragen. Danach gab man 32,0 g Hydroxymethylsaccharin dazu, heizte auf 120°C und rührte 5 Stunden bei dieser Temperatur nach. Anschließend goß man die Lösung auf 3000 g Eiswasser, saugte ab und wusch mit Wasser neutral. Der Filterrückstand wurde mit 750 g 1 %iger Natronlauge angerührt, 1 Stunde nachgerührt, abgesaugt, mit Wasser neutral gewaschen und getrocknet. Man erhielt 34,5 g Dispergator der Formel (XI).

| Analyse: | | | | | |
|---|---|---|---|---|---|
| Ber.: | C 62,1 %, | H 3,3 %, | N 8,7 %, | Cl 7,7 %, | S 5,9 % |
| Gef.: | C 59,0, | H 4,0 %, | N 8,0 %, | Cl 6,9 %, | S 4,7 %. |

### Beispiel 10a

In einem Rührgefäß wurden nacheinander 75 g Isobutanol (85 %ig), 50 g feinteiliges Mahlgut Pigment Violet 23 (mit 22 % Salz aus der Synthese, hergestellt gemäß der DE-PS 27 42 575), 0,5 g Dispergator der Formel (XI), 2,5 g Alkylphenolpolyglykoläthersulfat (50 %ig) und 2,5 g Ameisensäure (98 %ig) eingetragen und 20 Stunden bei 25°C gerührt. Während dieser Zeit wurden noch 75 g Isobutanol 85 %ig zugetropft. Anschließend gab man 300 ml Wasser zu und erhitzte 5 Stunden zum Sieden. Danach wurde das Isobutanol abdestilliert, die Pigmentzubereitung abgesaugt, neutral gewaschen und getrocknet. Man erhielt 37,9 g Pigmentzubereitung, die im Nitrocellulose-Druck transparente, farbstarke und glänzende Drucke liefert.

## Patentansprüche

1. Pigmentzubereitung bestehend im wesentlichen aus
a) mindestens einem Pigment aus der Klasse der Azo-, Anthrapyrimidin-, Anthanthron-, Chinacridon-, Perinon-, Diketopyrrolopyrrol-, Dioxazin-, Flavanthron-, Indanthron-, Isoindolinon-, Isoviolanthron-, Perylen-, Phthalocyanin, Pyranthron,- oder Thioindigopigmente oder aus einer Mischung von Pigmenten, die unterschiedlichen der vorstehend genannten Klassen angehören, und
b) mindestens einem Dispergator der allgemeinen Formel (I) 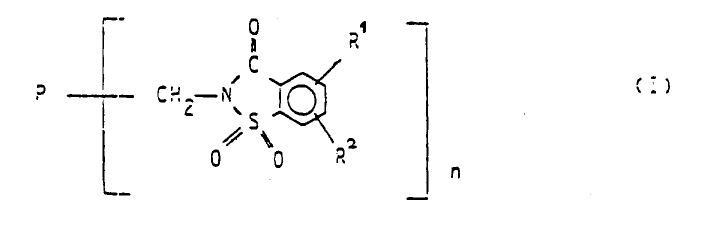 in der
P unabhängig von den in a) genannten Pigmenten einen Rest eines Azo-, Anthanthron-, Chinacridon-, Perinon-, Diketopyrrolopyrrol-, Dioxazin-, Indanthron-, Perylen-, Phthalocyanin- oder Thioindigopigments darstellt,
R¹ und R² unabhängig voneinander Wasserstoff, Halogen, C₁-C₄-Alkyl, C₁-C₄-Alkoxy oder Nitro, bedeuten und
n eine Zahl von 1 bis 4 ist
und in der die CH₂-Gruppe des Saccharin-Restes an ein aromatisches C-Atom von P gebunden ist, wobei der Gehalt des Dispergators der Formel (I) zwischen 0,5 und 30 Gew.-%, bezogen auf des Gewicht des Pigments liegt.

2. Pigmentzubereitung gemäß Anspruch 1, dadurch gekennzeichnet, daß sie mindestens ein Pigment aus der Klasse der Indanthron-, Perylen-, Chinacridon-, Phthalocyanin- oder Perinonpigmente enthält.

3. Pigmentzubereitung gemäß Anspruch 1 oder 2, dadurch gekennzeichnet, daß sie mindestens einen Dispergator der allgemeinen Formel (I) enthält, in der der Rest P unabhängig von den verwendeten Pigmenten einen Rest eines Indanthron-, Perylen-, Chinacridon-, Phthalocyanin- oder Perinonpigmentes bedeutet.

4. Pigmentzubereitung nach mindestens einem der Ansprüche 1 bis 3, dadurch gekennzeichnet, daß n eine Zahl von 1 bis 3,6 ist.

5. Pigmentzubereitung nach mindestens einem der Ansprüche 1 bis 4, dadurch gekennzeichnet, daß R¹ und R² jeweils Wasserstoff bedeuten.

6. Pigmentzubereitung, bestehend aus
a) 99,5 bis 70 Gew.-% mindestens eines Pigments aus der Klasse der Azo-, Anthrapyrimidin-, Anthanthron-, Chinacridon-, Perinon-, Diketopyrrolopyrrol-, Dioxazin-, Flavanthron-, Indanthron-, Isoindolinon-, Isoviolanthron-, Perylen-, Phthalocyanin, Pyranthron- oder Thioindigopigmente oder aus einer Mischung von Pigmenten, die unterschiedlichen der vorstehend genannten Klassen angehören,
b) 0,5 bis 30 Gew.-% mindestens eines Dispergators der allgemeinen Formel (I) 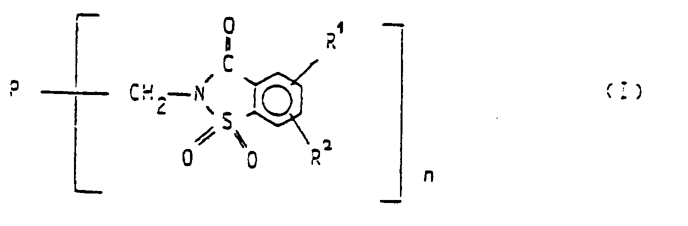 in der
P unabhängig von den in a) genannten Pigmenten einen Rest eines Azo-, Anthanthron-, Chinacridon-, Perinon-, Diketopyrrolopyrrol-, Dioxazin-, Indanthron-, Perylen-, Phthalocyanin- oder Thioindigopigments darstellt,
R¹ und R² unabhängig voneinander Wasserstoff, Halogen, C₁-C₄-Alkyl, C₁-C₄-Alkoxy oder Nitro, bedeuten und
n eine Zahl von 1 bis 4 ist
und in der die CH₂-Gruppe des Saccharin-Restes an ein aromatisches C-Atom von P gebunden ist,
c) 0 bis 10 Gew.-% eines oder mehrerer Tenside und
d) 0 bis 10 Gew.-% weiterer üblicher Zusatzstoffe,
wobei die Anteile der jeweiligen Komponenten auf das Gesamtgewicht der Pigmentzubereitung bezogen sind.

7. Pigmentzubereitung nach Anspruch 6, bestehend aus
a) 95 bis 80 Gew.-% mindestens eines der genannten Pigmente;
b) 5 bis 20 Gew.-% mindestens eines der genannten Dispergatoren;
c) 0 bis 5 Gew.-% eines oder mehrerer Tenside und
d) 0 bis 5 Gew.-% weiterer üblicher Zusatzstoffe,
wobei die Anteile der jeweiligen Komponenten auf das Gesamtgewicht der Pigmentzubereitung bezogen sind.

8. Pigmentzubereitung nach mindestens einem der Ansprüche 1 bis 5, dadurch gekennzeichnet, daß der Gehalt des oder der Dispergatoren zwischen 1 und 15 Gew.-%, bezogen auf das Gewicht des oder der eingesetzten Pigmente, liegt.

9. Pigmentzubereitung nach mindestens einem der Ansprüche 1 bis 8, bestehend im wesentlichen aus nur einem Pigment und einem Dispergator.

10. Pigmentzubereitung nach mindestens einem der Ansprüche 1 bis 9, dadurch gekennzeichnet, daß die dem Rest P des Dispergators zugrundeliegenden Pigmente und die verwendeten Pigmente jeweils derselben Klasse angehören.

11. Dispergator der allgemeinen Formel (I) 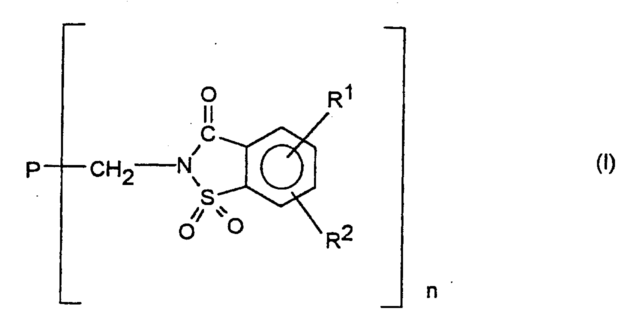 in der
P einen Rest eines Azo-, Anthanthron-, Perinon-, Diketopyrrolopyrrol-, Dioxazin-, Indanthron-, Perylen-, Phthalocyanin- oder Thioindigopigments darstellt,
R¹ und R² unabhängig voneinander Wasserstoff, Halogen, C₁-C₄-Alkyl, C₁-C₄-Alkoxy oder Nitro, bedeuten und
n eine Zahl von 1 bis 4 ist
und in der die CH₂-Gruppe des Saccharin-Restes an ein aromatisches C-Atom von P gebunden ist.

12. Dispergator gemäß Anspruch 11, dadurch gekennzeichnet, daß R¹ und R² jeweils Wasserstoff bedeuten.

13. Dispergator nach mindestens einem der Ansprüche 11 und 12, dadurch gekennzeichnet, daß n eine Zahl von 1 bis 3,6 ist.

14. Verfahren zur Herstellung eines Dispergators nach Anspruch 11, dadurch gekennzeichnet, daß das dem Rest P zugrundeliegende organische Pigment mit dem entsprechenden Saccharin-Derivat und Formaldehyd oder einer Formaldehyd freisetzenden Verbindung oder mit dem entsprechenden N-Methylolderivat des Saccharins in Gegenwart eines Kondensationsmittels, vorzugsweise Schwefelsäure oder Polyphospharsäure, bei einer Temperatur zwischen 0°C und 150°C kondensiert wird.

15. Verwendung der Pigmentzubereitung nach mindestens einem der Ansprüche 1 bis 10 zum Pigmentieren hochmolekularer Materialien.

16. Verwendung der Pigmentzubereitung nach mindestens einem der Ansprüche 1 bis 10 zum Pigmentieren von hochmolekularen Materialien in Form plastischer Massen, Schmelzen, Spinnlösungen, Lacken, Anstrichfarben oder Druckfarben.

17. Verwendung der Pigmentzubereitungen nach mindestens einem der Ansprüche 1 bis 10 zum Pigmentieren von hochpolaren, wäßrigen Lacken auf Polyurethanbasis oder lösungsmittelarmen Acrylharzlacken mit hohem Festkörperanteil.

18. Verwendung der Pigmentzubereitungen nach mindestens einem der Ansprüche 1 bis 10 zum Pigmentieren von Druckfarben auf Basis von Nitrocellulose.

## Claims

1. A pigment preparation consisting essentially of
a) at least one pigment from the class of the azo, anthrapyrimidine, anthanthrone, quinacridone, perinone, diketopyrrolopyrrole, dioxazine, flavanthrone, indanthrone, isoindolinone, isoviolanthrone, perylene, phthalocyanine, pyranthrone or thioindigo pigments or a mixture of pigments belonging to various of the abovementioned classes, and
b) at least one dispersant of the formula (I) 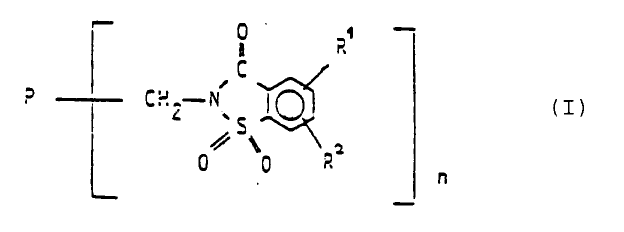 in which
P, independently of the pigments mentioned in a), is a radical of an azo, anthanthrone, quinacridone, perinone, diketopyrrolopyrrole, dioxazine, indanthrone, perylene, phthalocyanine or thioindigo pigment,
R¹ and R², independently of one another, are hydrogen, halogen, C₁-C₄-alkyl, C₁-C₄-alkoxy or nitro, and
n is a number from 1 to 4,
and in which the CH₂ group of the saccharin radical is attached to an aromatic carbon atom of P, the content of the dispersant of the formula (I) being between 0.5 and 30% by weight, relative to the weight of the pigment.

2. A pigment preparation as claimed in claim 1, which contains at least one pigment from the class of the indanthrone, perylene, quinacridone, phthalocyanine or perinone pigments.

3. A pigment preparation as claimed in claim 1 or 2, which contains at least one dispersant of the formula (I) in which the radical P, independently of the pigments used, is a radical of an indanthrone, perylene, quinacridone, phthalocyanine or perinone pigment.

4. A pigment preparation as claimed in at least one of claims 1 to 3, wherein n is a number from 1 to 3.6.

5. A pigment preparation as claimed in at least one of claims 1 to 4, wherein R¹ and R² are each hydrogen.

6. A pigment preparation consisting of
a) 99.5 to 70% by weight of at least one pigment from the class of the azo, anthrapyrimidine, anthanthrone, quinacridone, perinone, diketopyrrolopyrrole, dioxazine, flavanthrone, indanthrone, isoindolinone, isoviolanthrone, perylene, phthalocyanine, pyranthrone or thioindigo pigments or a mixture of pigments belonging to various of the abovementioned classes,
b) 0.5 to 30% by weight of at least one dispersant of the formula (I) 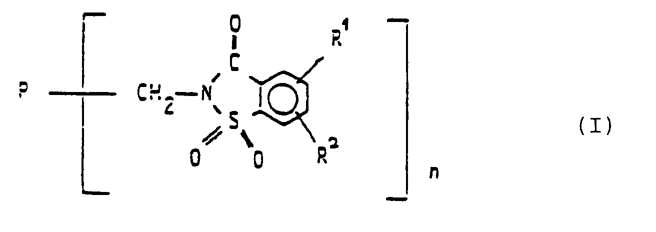 in which
P, independently of the pigments mentioned in a), is a radical of an azo, anthanthrone, quinacridone, perinone, diketopyrrolopyrrole, dioxazine, indanthrone, perylene, phthalocyanine or thioindigo pigment,
R¹ and R², independently of one another, are hydrogen, halogen, C₁-C₄-alkyl, C₁-C₄-alkoxy or nitro, and
n is a number from 1 to 4,
and in which the CH₂ group of the saccharin radical is attached to an aromatic carbon atom of P,
c) 0 to 10% by weight of one or more surfactants and
d) 0 to 10% by weight of further customary additives,
the proportions of the components being based in each case on the total weight of the pigment preparation.

7. A pigment preparation as claimed in claim 6, consisting of
a) 95 to 80% by weight of at least one of the pigments mentioned;
b) 5 to 20% by weight of at least one of the dispersants mentioned;
c) 0 to 5% by weight of one or more surfactants and
d) 0 to 5% by weight of further customary additives,
the proportions of the components being based in each case on the total weight of the pigment preparation.

8. A pigment preparation as claimed in at least one of claims 1 to 5, wherein the content of the dispersant(s) is between 1 and 15% by weight, relative to the weight of the pigment(s) used.

9. A pigment preparation as claimed in at least one of claims 1 to 8, consisting essentially of only one pigment and one dispersant.

10. A pigment preparation as claimed in at least one of claims 1 to 9, wherein the pigments on which the radical P of the dispersant is based and the pigments used both belong to the same class.

11. A dispersant of the formula (I) 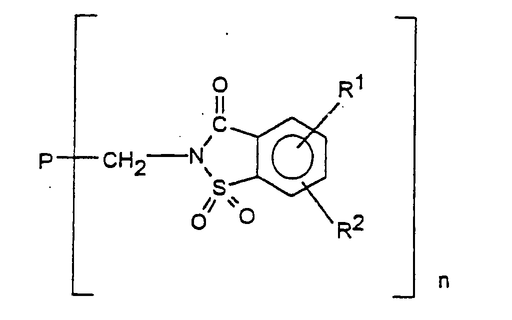 in which
P is a radical of an azo, anthanthrone, perinone, diketopyrrolopyrrole, dioxazine, indanthrone, perylene, phthalocyanine or thioindigo pigment,
R¹ and R², independently of one another, are hydrogen, halogen, C₁-C₄-alkyl, C₁-C₄-alkoxy or nitro, and
n is a number from 1 to 4,
and in which the CH₂ group of the saccharin radical is attached to an aromatic carbon atom of P.

12. A dispersant as claimed in claim 11, wherein R¹ and R² are each hydrogen.

13. A dispersant as claimed in at least one of claims 11 and 12, wherein n is a number from 1 to 3.6.

14. A process for the preparation of a dispersant as claimed in claim 11, which comprises condensing the organic pigment underlying the radical P with the corresponding saccharin derivative and formaldehyde or a formaldehyde-releasing compound or with the corresponding N-methylol derivative of saccharin in the presence of a condensing agent, preferably sulfuric acid or polyphosphoric acid, at a temperature of between 0°C and 150°C.

15. Use of the pigment preparation as claimed in at least one of claims 1 to 10 for the pigmenting of high-molecular-weight materials.

16. Use of the pigment preparation as claimed in at least one of claims 1 to 10 for the pigmenting of high-molecular-weight materials in the form of plastically deformable compositions, melts, spinning solutions, varnishes, paints or printing inks.

17. Use of the pigment preparation as claimed in at least one of claims 1 to 10 for the pigmenting of highly polar, aqueous polyurethane-based varnishes or low-solvent high-solids acrylic varnishes.

18. Use of the pigment preparation as claimed in at least one of claims 1 to 10 for the pigmenting of printing inks based on nitrocellulose.

## Revendications

1. Préparation pigmentaire, constituée essentiellement
a) d'au moins un pigment organique choisi dans la classe des pigments azoïques, d'anthrapyrimidine, d'anthanthrone, de quinacridone, de périnone, de dicétopyrrolopyrrole, de dioxazine, de flavanthrone, d'indanthrone, d'isoindolinone, d'isoviolanthrone, de pérylène, de phtalocyanine, de pyranthrone ou de thioindigo, ou d'un mélange de pigments qui appartiennent à différentes des classes mentionnées ci-dessus, et
b) d'au moins un dispersant de formule générale (I) 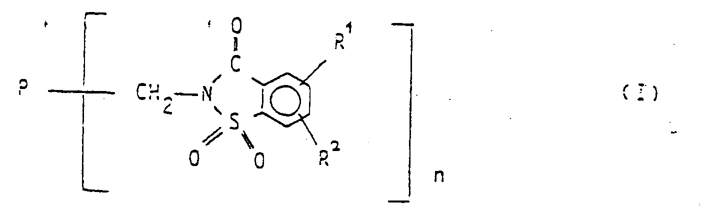 dans laquelle
P, indépendamment des pigments mentionnés en a), est un résidu d'un pigment azoïque, d'anthanthrone, de quinacridone, de périnone, de dicétopyrrolopyrrole, de dioxazine, d'indanthrone, de pérylène, de phtalocyanine ou de thioindigo,
R¹ et R², indépendamment l'un de l'autre, sont chacun un hydrogène, un halogène, un radical alkyle en C₁-C₄, alcoxy en C₁-C₄ ou nitro, et
n est un nombre de 1 à 4,
et dans laquelle le groupe CH₂ du résidu de saccharine est lié à un atome de carbone aromatique de P, la teneur en dispersant de formule (I) étant comprise entre 0,5 et 30 % en poids, par rapport au poids du pigment.

2. Préparation pigmentaire selon la revendication 1, caractérisée en ce qu'elle contient au moins un pigment choisi dans la classe des pigments d'indanthrone, de pérylène, de quinacridone, de phtalocyanine ou de périnone.

3. Préparation pigmentaire selon la revendication 1 ou 2, caractérisée en ce qu'elle contient au moins un dispersant de formule générale (I) dans laquelle le résidu P, indépendamment des pigments utilisés, est un résidu d'un pigment d'indanthrone, de pérylène, de quinacridone, de phtalocyanine ou de périnone.

4. Préparation pigmentaire selon l'une des revendications 1 à 3, caractérisée en ce que n est un nombre de 1 à 3,6.

5. Préparation pigmentaire selon au moins l'une des revendications 1 à 4, caractérisée en ce que R¹ et R² sont chacun un hydrogène.

6. Préparation pigmentaire constituée
a) de 99,5 à 70 % en poids d'au moins un pigment de la classe des pigments azoïques, d'anthrapyrimidine, d'anthanthrone, de quinacridone, de périnone, de dicétopyrrolopyrrole, de dioxazine, de flavanthrone, d'indanthrone, d'isoindolinone, d'isoviolanthrone, de pérylène, de phtalocyanine, de pyranthrone ou de thioindigo, ou d'un mélange de pigments qui appartiennent à différentes des classes mentionnées ci-dessus,
b) de 0,5 à 30 % en poids d'au moins un dispersant de formule générale (I) 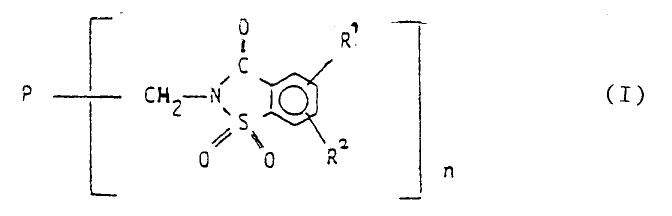 dans laquelle
P, indépendamment des pigments mentionnés en a), est un résidu d'un pigment azoïque, d'anthanthrone, de quinacridone, de périnone, de dicétopyrrolopyrrole, de dioxazine, d'indanthrone, de pérylène, de phtalocyanine ou de thioindigo,
R¹ et R², indépendamment l'un de l'autre, sont chacun un hydrogène, un halogène, un radical alkyle en C₁-C₄, alcoxy en C₁-C₄, ou nitro, et
n est un nombre de 1 à 4, et dans laquelle le groupe CH₂ du résidu de saccharine est lié à un atome de carbone aromatique de P,
c) de 0 à 10 % en poids d'un ou plusieurs tensioactifs, et
d) de 0 à 10 % en poids d'autres additifs usuels, les quantités des différents constituants étant rapportées au poids total de la préparation pigmentaire.

7. Préparation pigmentaire selon la revendication 6, constituée
a) de 95 à 80 % en poids d'au moins l'un des pigments mentionnés ;
b) de 5 à 20 % en poids d'au moins l'un des dispersants mentionnés ;
c) de 0 à 5 % en poids d'un ou plusieurs tensioactifs, et
d) de 0 à 5 % en poids d'autres additifs usuels,
les quantités des différents constituants étant rapportées au poids total de la préparation pigmentaire.

8. Préparation pigmentaire selon au moins l'une des revendications 1 à 5, caractérisée en ce que le ou les dispersants sont présents en une quantité comprise entre 1 et 15 % en poids par rapport au poids du ou des pigments utilisés.

9. Préparation pigmentaire selon au moins l'une des revendications 1 à 8, constituée essentiellement de seulement un pigment et un dispersant.

10. Préparation pigmentaire selon au moins l'une des revendications 1 à 9, caractérisée en ce que les pigments qui sont à la base du résidu P du dispersant et les pigments utilisés appartiennent dans tous les cas à la même classe.

11. Dispersant de formule générale (I) 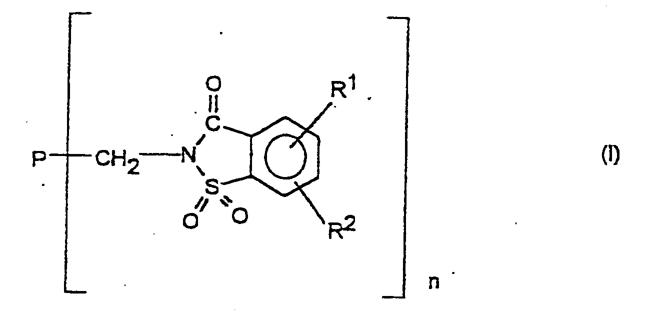 dans laquelle
P, est un résidu d'un pigment azoïque, d'anthanthrone, de périnone, de dicétopyrrolopyrrole, de dioxazine, d'indanthrone, de pérylène, de phtalocyanine ou de thioindigo
R¹ et R², indépendamment l'un de l'autre, sont chacun un hydrogène, un halogène, un radical alkyle en C₁-C₄, alcoxy en C₁-C₄ ou nitro, et
n est un nombre de 1 à 4, et dans laquelle le groupe CH₂ du résidu de saccharine est lié à un atome de carbone aromatique de P.

12. Dispersant selon la revendication 11, caractérisé en ce que R¹ et R² sont chacun un hydrogène.

13. Dispersant selon au moins l'une des revendications 11 et 12, caractérisé en ce que n est un nombre de 1 à 3,6.

14. Procédé pour préparer un dispersant selon la revendication 11, caractérisé en ce que le pigment organique qui est à la base du résidu P est condensé, à une température comprise entre 0°C et 150°C, en présence d'un agent de condensation, de préférence l'acide sulfurique ou l'acide polyphosphorique, avec le dérivé correspondant de la saccharine et du formaldéhyde ou un composé libérant du formaldéhyde, ou avec le dérivé N-méthylolé correspondant de la saccharine.

15. Utilisation de la préparation pigmentaire selon au moins l'une des revendications 1 à 10 pour pigmenter des matériaux à grande masse moléculaire.

16. Utilisation de la préparation pigmentaire selon au moins l'une des revendications 1 à 10 pour pigmenter des matériaux à grande masse moléculaire sous forme de masses plastiques, de masses fondues, de solutions à filer, de vernis, de peintures ou d'encres d'imprimerie.

17. Utilisation des préparations pigmentaires selon au moins l'une des revendications 1 à 10 pour pigmenter des vernis aqueux, fortement polaires, à base de polyuréthanne ou des vernis de résine acrylique, pauvres en solvants, ayant une grande teneur en extrait sec.

18. Utilisation des préparations pigmentaires selon au moins l'une des revendications 1 à 10 pour pigmenter des encres d'imprimerie à base de cellulose.
